# EUROPEAN PATENT APPLICATION

(11) **EP 4 773 417 A1**
(43) Date of publication of application: **08.07.2026**
(21) Application number: 24922409.8
(22) Date of filing: 25.11.2024
(51) Int. Cl.: H01M 50/552, H01M 50/593, H01M 50/258, F16C 19/02, F16C 27/04

(54) **CONNECTOR, AND BATTERY ASSEMBLY AND BATTERY MODULE COMPRISING SAME**

(30) Priority: 30.01.2024 KR 20240014257
(71) Applicant: LG Energy Solution, Ltd., Seoul 07335 (KR)
(72) Inventor: SEON, Sang Ok, Daejeon 34122 (KR)
(74) Representative: Hoffmann Eitle
(86) International application number: PCT/KR2024/018731
(87) International publication number: WO 2025/164900

(57) **Abstract**

The present invention relates to a connector. The connector according to one aspect of the present invention is a battery cell connector for electrically connecting a battery cell to the outside, and comprises: a base member having a lead surface on which an electrode lead of the battery cell can be placed; and a conducting assembly coupled to the base member so as to be electrically connectable to the electrode lead placed on the lead surface, wherein the conducting assembly can include: a conductive contact member movably coupled to the base member so that at least a part thereof can protrude from the lead surface of the base member; and an elastic member for elastically supporting the contact member toward the lead surface of the base member.

## Description

### TECHNICAL FIELD

### CROSS-REFERENCE TO RELATED APPLICATIONS

The present application claims priority to Korean Patent Application No. 10-2024-0014257 filed on January 30, 2024 in the Republic of Korea, the disclosures of which are incorporated herein by reference.

### TECHNICAL FIELD

The present disclosure relates to a connector, a battery assembly including the same and a battery module, and more specifically, to a connector for electrically connecting a battery cell to the outside, a battery assembly including the same and a battery module.

### BACKGROUND ART

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

Secondary batteries may be provided in the form of a battery cell. The battery cell is classified into a cylindrical, prismatic, or pouch type, depending on the shape of the exterior material where it is accommodated, and it is roughly classified into a jelly roll type in which a separator is interposed between a long sheet-like positive electrode and negative electrode coated with an active material and wound, a stack type in which a plurality of positive electrodes and negative electrodes of a predetermined size are sequentially stacked with a separator interposed therebetween, and a stack/folding type in which the stack-type unit cells are wound with a long separation film, depending on the shape of the electrode assembly.

Meanwhile, several battery cells may be electrically connected to each other. This may be to increase the electric capacity or voltage that can be charged and discharged. To this end, the electrode leads of the battery cells may be coupled to each other. The electrode leads are conductive members protruding or extending to the outside of the battery cell, and are configured to connect the electrode assembly provided inside the battery cell to an external power source, load, or element. These electrode leads are generally provided in the form of films, sheets, wires, busbars, or metal pieces.

However, conventionally, a welding process was used to couple the electrode leads of the battery cells to each other. The electrode leads of the battery cells were electrically coupled by directly welding each other or by welding them together to one busbar as an intermediate medium.

This conventional coupling method had problems of not only bending the electrode leads to stack and modularize the battery cells, but also requiring additional parts such as busbars for performing the welding process. Additionally, after several battery cells were welded together, it was difficult to select and separate only particular battery cells among them.

Accordingly, there has been an urgent need to develop a connector capable of electrically connecting a battery cell to the outside (e.g., another battery cell, an external load, power source, or the like) without using a welding process, a battery assembly including the same and a battery module.

### SUMMARY

### TECHNICAL PROBLEM

The present disclosure is designed to solve the problems of the related art, and therefore the present disclosure is directed to providing a connector capable of electrically connecting a battery cell to the outside (e.g., another battery cell, an external load, power source, or the like) without using a welding process, a battery assembly including the same and a battery module.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided a connector for a battery cell for electrically connecting a battery cell to the outside, the connector including a base member having a lead surface on which an electrode lead of a battery cell is placed; and an energizing assembly coupled to the base member and electrically connected to the electrode lead placed on the lead surface, wherein the energizing assembly includes a conductive contact member movably coupled to the base member so as to allow at least a portion thereof to protrude onto the lead surface of the base member; and an elastic member elastically supporting the contact member toward the lead surface of the base member.

At this time, at least a portion of the contact member may be formed convexly in a direction perpendicular to the lead surface.

At this time, the base member may be formed with a contact member hole opened onto the lead surface, and the contact member may protrude onto the lead surface through the contact member hole.

At this time, an opening of the contact member hole formed on the lead surface may have a smaller diameter than the contact member.

At this time, the diameter of the contact member hole may increase toward a direction away from the lead surface.

At this time, the contact member may have a spherical shape.

At this time, the energizing assembly may further include a bearing member that supports the contact member for rolling motion, and the elastic member may elastically support the bearing member.

At this time, the bearing member may include a bearing portion supporting the contact member; and a rod portion extending from the bearing portion in a direction away from the contact member, wherein the elastic member may be formed of a spring inserted through the rod portion.

At this time, the energizing assembly may further include a guide portion extending from the base member in a direction away from the lead surface, and the bearing member may be provided to be guided by the guide portion.

At this time, the base member may be made of a conductive material to be electrically connected to the energizing assembly.

At this time, the base member may include a positive electrode side base portion having a positive electrode lead surface on which a positive electrode lead is placed; and a negative electrode side base portion having a negative electrode lead surface on which a negative electrode lead is placed, wherein the energizing assembly may include a positive electrode side energizing assembly coupled to the positive electrode side base portion; and a negative electrode side energizing assembly coupled to the negative electrode side base portion.

At this time, the base member may further include an insulating portion interposed between the positive electrode side base portion and the negative electrode side base portion.

At this time, the base member may include a pair of base portions spaced apart by a predetermined distance and allowing the electrode lead of the battery cell to be inserted therebetween; and a connection portion connecting the pair of base portions so that they are supported by each other, wherein the lead surfaces may be provided as a pair, formed on each of the pair of base portions, and disposed to face each other.

At this time, the energizing assembly may be provided in plurality, and some of the plurality of energizing assemblies may be coupled to one of the pair of base portions, and some of the rest may be coupled to the other of the pair of base portions.

At this time, the plurality of energizing assemblies may be disposed to be misaligned with each other in a direction in which the pair of base portions are spaced apart.

At this time, the connector may further include a catch member that is movable onto the lead surface to be caught by the electrode lead placed on the lead surface.

At this time, the base member may include a base portion extending in one direction and having the lead surface provided on the side, wherein the energizing assembly may be provided in plurality and arranged along the direction in which the base portion extends, and the catch member may be provided in plurality and arranged in a direction perpendicular to the direction in which the base portion extends.

According to another aspect of the present disclosure, there is provided a battery assembly including a battery cell including a cell body having an electrode assembly and an electrode lead electrically connected to the electrode assembly and extending to the outside of the cell body; and a connector for electrically connecting the battery cell to the outside, wherein the connector includes a base member having a lead surface on which the electrode lead is placed; and an energizing assembly coupled to the base member and electrically connected to the electrode lead placed on the lead surface, wherein the energizing assembly includes a conductive contact member movably coupled to the base member so as to allow at least a portion thereof to protrude onto the lead surface of the base member; and an elastic member elastically supporting the contact member toward the lead surface of the base member, wherein the electrode lead of the battery cell and the contact member are in electrical communication with each other.

According to still another aspect of the present disclosure, there is provided a battery module including a housing; and a plurality of battery assemblies accommodated in the housing and arranged in a row, wherein the battery assemblies include a battery cell including a cell body having an electrode assembly and an electrode lead electrically connected to the electrode assembly and extending to the outside of the cell body; and a connector for electrically connecting the battery cell to the outside, wherein the connector includes a base member having a lead surface on which the electrode lead is placed; and an energizing assembly coupled to the base member and electrically connected to the electrode lead placed on the lead surface, wherein the energizing assembly includes a conductive contact member movably coupled to the base member so as to allow at least a portion thereof to protrude onto the lead surface of the base member; and an elastic member elastically supporting the contact member toward the lead surface of the base member.

At this time, the battery module may include an insulating member interposed between each of the plurality of battery assemblies, wherein the insulating member may be in respective contact with the base member of the neighboring battery assemblies among the plurality of battery assemblies.

### ADVANTAGEOUS EFFECTS

According to one aspect of the present disclosure, a conductive contact member is movably provided to protrude onto a lead surface of a base member, and an elastic member is configured to elastically support the contact member toward the lead surface.

Accordingly, the contact member may be in contact with an electrode lead of a battery cell seated on the lead surface and in electrical communication, so that the battery cell may be electrically connected to the outside without using a welding process.

According to one aspect of the present disclosure, an opening of the contact member hole formed in the base member has a smaller diameter than the contact member, so that the contact member may not fall off onto the lead surface. Through this, the structural stability of this connector may be increased, and additionally, the contact force between the contact member and the electrode lead may be properly controlled.

According to one aspect of the present disclosure, an insulating member is provided between the positive electrode side base portion and the negative electrode side base portion of the base member, so that a short circuit between the positive electrode lead and the negative electrode lead of the battery cell may be prevented.

According to one aspect of the present disclosure, the base portions of the base member are configured as a pair and are spaced apart from each other, so that the electrode lead may be inserted and coupled therebetween. Accordingly, the coupling and connection between this connector and the battery cell may be more stably performed.

According to one aspect of the present disclosure, a catch member capable of being caught by the electrode lead seated on the lead surface of the base member is provided, so that the coupling and connection between this connector and the battery cell may be more stably performed.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a configuration diagram schematically showing a battery module according to an embodiment of the present disclosure.
FIG. 2 is a horizontal cross-sectional view of a plurality of battery assemblies included in a battery module according to an embodiment of the present disclosure.
FIG. 3 is a perspective view of a battery assembly according to an embodiment of the present disclosure.
FIG. 4 is a cross-sectional view taken along line I-I of FIG. 3.
FIG. 5 is an enlarged view of part A of FIG. 4.
FIG. 6 is a view for describing a process in which a battery cell is coupled to a connector according to an embodiment of the present disclosure.
FIG. 7 is a cross-sectional view taken along line II-II of FIG. 3.
FIG. 8 is a cross-sectional view taken along line III-III of FIG. 3.
FIG. 9 is a horizontal cross-sectional view of a plurality of battery assemblies included in a battery module according to another embodiment of the present disclosure.

### DETAILED DESCRIPTION

Preferred embodiments of the present disclosure will be described in detail to enable those having ordinary skill in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

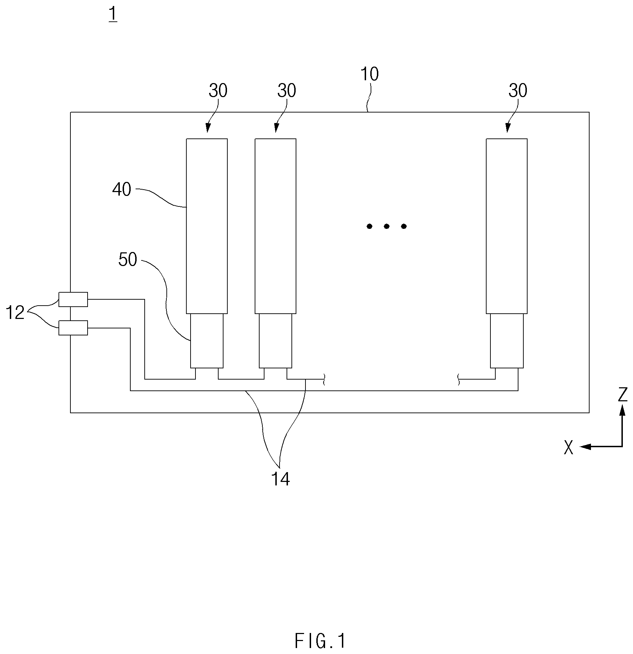

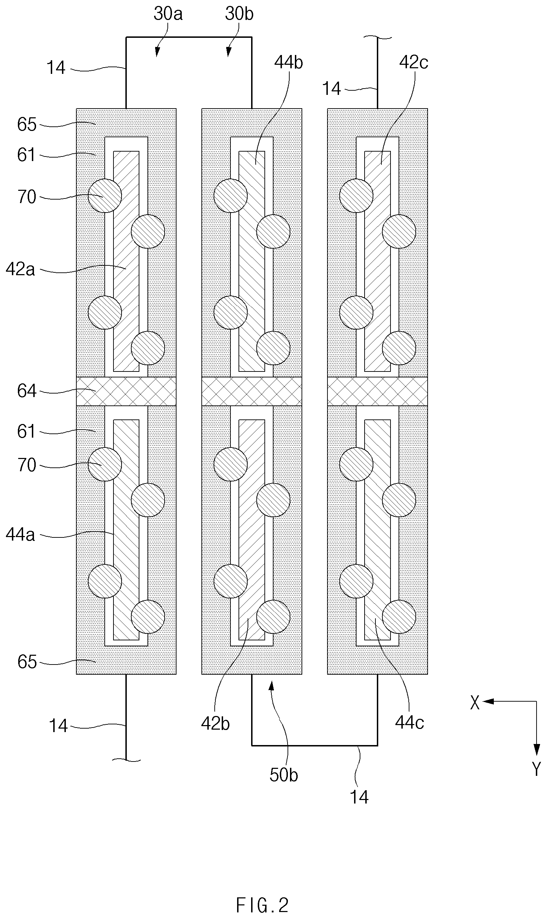

FIG. 1 is a configuration diagram schematically showing a battery module according to an embodiment of the present disclosure. FIG. 2 is a horizontal cross-sectional view of a plurality of battery assemblies included in a battery module according to an embodiment of the present disclosure.

In FIGS. 1 and 2, a battery module 1 according to an embodiment of the present disclosure is disclosed. Referring to FIG. 1, the battery module 1 according to an embodiment of the present disclosure may be a module for charging and storing electric energy or for discharging and providing electric energy to another appliance or device.

The battery module 1 according to an embodiment of the present disclosure may include a housing 10. The housing 10 may be configured to accommodate and protect other components of this battery module 1. To this end, the housing 10 may be made of a plastic or metal material having a predetermined rigidity, but is not limited thereto.

In this embodiment, the housing 10 may be formed as a box-shaped structure. The housing 10 may be formed by coupling or assembling a plurality of plates to each other. However, the shape of the housing 10 may be appropriately modified as necessary.

In this embodiment, a terminal 12 may be coupled through the housing 10. The terminal 12 may be a terminal for electrically connecting battery assemblies 30 to be described later to other external devices or power sources. Such a terminal 12 may be formed of various known connectors for electrically connecting different configurations.

In this embodiment, connection members 14 may be provided inside the housing 10. The connection members 14 may be configured to electrically connect components accommodated inside the housing 10 to each other. The connection members 14 may be formed of busbars, wires, conductive metal pieces, or the like, but are not limited thereto.

As shown in FIGS. 1 and 2, in this embodiment, a plurality of battery assemblies 30 may be accommodated inside the housing 10, and the connection members 14 may connect these battery assemblies 30 and terminals 12 in a predetermined manner.

As an example, the connection member 14 may connect the battery assemblies 30 in series with each other. More specifically, if three battery assemblies arranged as shown in FIG. 2 are named as the first battery assembly 30a, the second battery assembly 30b, and the third battery assembly 30c, respectively, in the order in which they are arranged from the front (positive direction of the X-axis) to the rear (negative direction of the X-axis), the connection member 14 may connect the first to third battery assemblies 30a to 30c in series in the order of arrangement.

More specifically, the connection member 14 may electrically connect the positive electrode lead 42a of the first battery assembly 30a to the negative electrode lead 44b of the second battery assembly 30b, and electrically connect the positive electrode lead 42b of the second battery assembly 30b to the negative electrode lead 44c of the third battery assembly 30c.

And, as shown in FIG. 1, the connection member 14 may electrically connect the battery assemblies 30 connected in series and the terminal 12. The arrangement of these connection members 14 may be appropriately changed in consideration of the connection method of the battery assemblies 30 and the structure of this battery module 1.

Referring to FIG. 1 again, the battery module 1 according to an embodiment of the present disclosure may include at least one battery assembly 30. The battery assembly 30 may be an assembly that charges and stores electric energy or discharges and provides stored electric energy to the outside. That is, the battery assembly 30 may be configured to be responsible for the charging and discharging functions in this battery module 1.

In this embodiment, the battery assemblies 30 may be configured in plurality. The plurality of battery assemblies 30 may be electrically connected in a predetermined manner by the connection member 14 described above. Through this, the electric capacity, voltage, and the like of this battery module 1 may be increased.

Hereinafter, a battery assembly according to an embodiment of the present disclosure will be described in detail with different drawings.

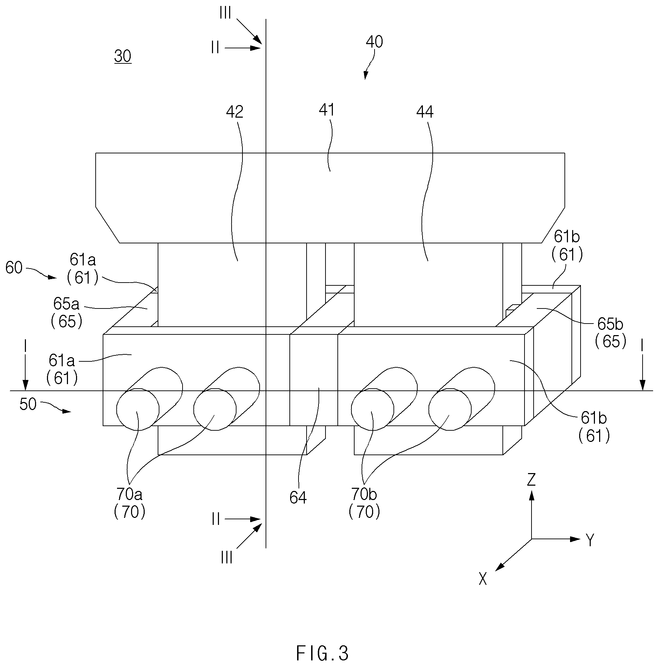

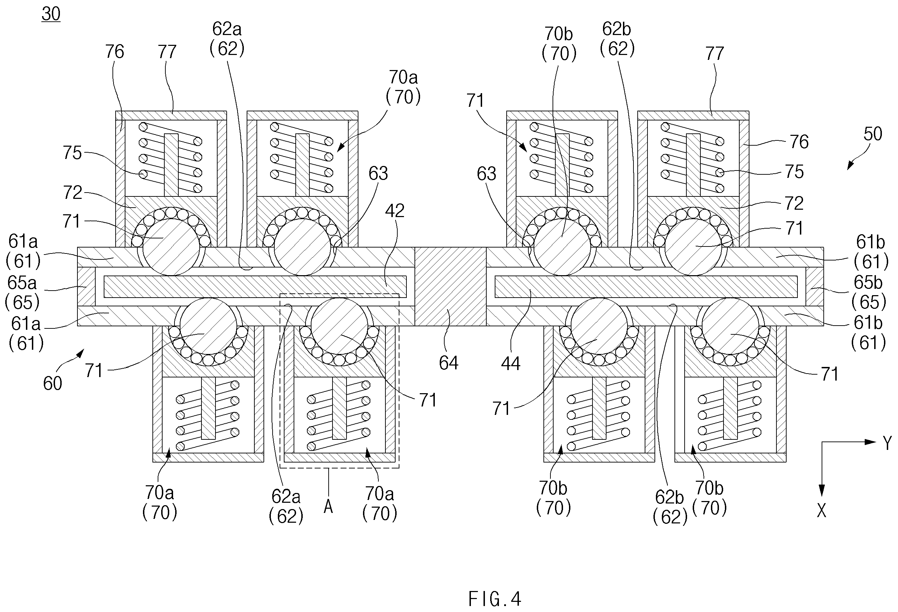

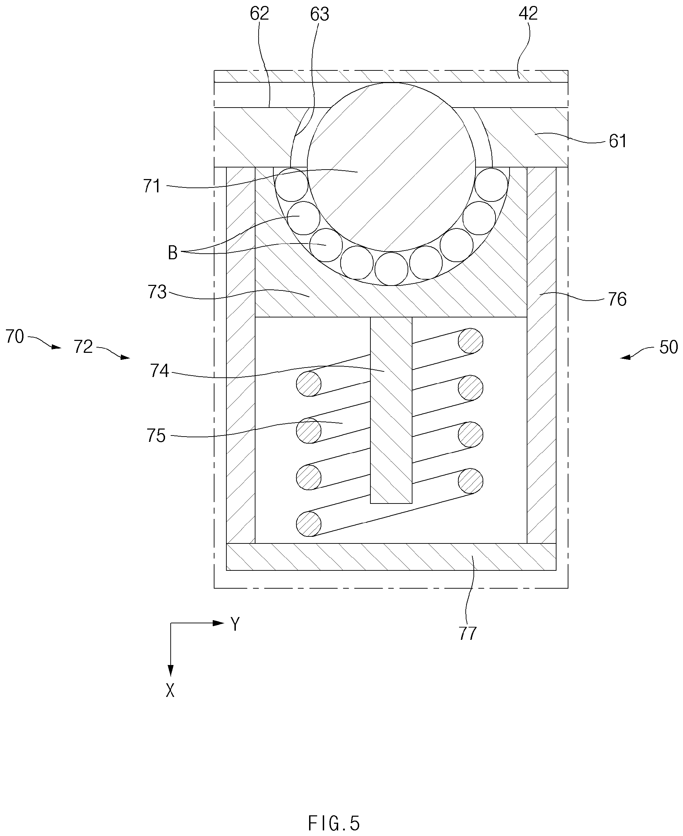

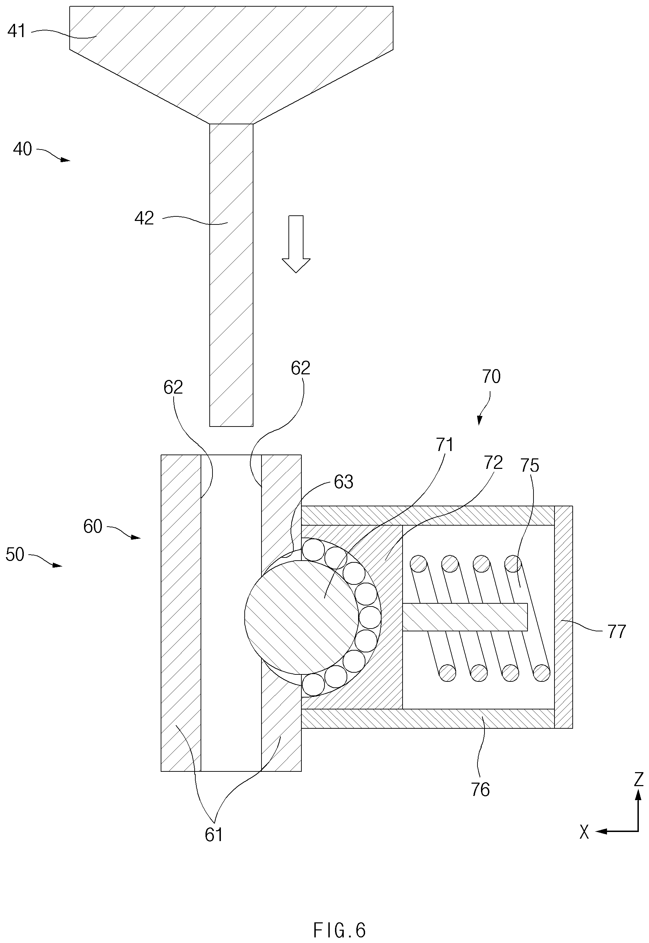

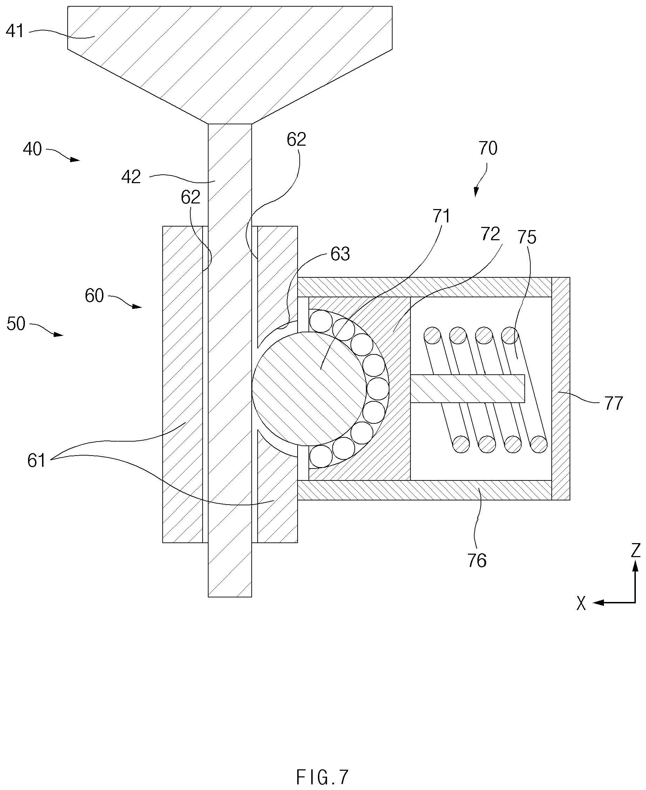

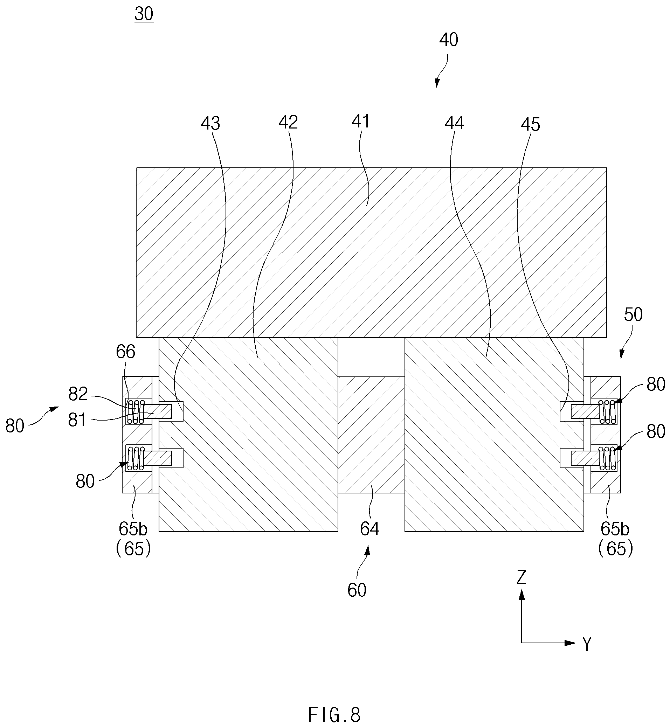

FIG. 3 is a perspective view of a battery assembly according to an embodiment of the present disclosure. FIG. 4 is a cross-sectional view taken along line I-I of FIG. 3. FIG. 5 is an enlarged view of part A of FIG. 4. FIG. 6 is a view for describing a process in which a battery cell is coupled to a connector according to an embodiment of the present disclosure. FIG. 7 is a cross-sectional view taken along line II-II of FIG. 3. FIG. 8 is a along line III-III of FIG. 3.

Referring to FIG. 3, the battery assembly 30 according to an embodiment of the present disclosure may include a battery cell 40. Such a battery cell 40 may be formed of a secondary battery. At this time, in this embodiment, the battery cell 40 may be a pouch-type battery cell. However, the type of the battery cell 40 is not particularly limited, and the battery cell 40 may be configured in a cylindrical battery cell, a prismatic battery cell, or the like.

In this embodiment, the battery cell 40 may include a cell body 41 and electrode leads 42, 44. The cell body 41 may have an electrode assembly in which a positive electrode and a negative electrode are stacked to be charged and discharged. The electrode leads 42, 44 may be configured to electrically connect the electrode assembly provided in the cell body 41 to the outside of this battery cell 40.

In this embodiment, the electrode leads 42, 44 may protrude (or extend) outward from the cell body 41. As shown, the electrode leads 42, 44 may extend downward (in the negative direction of the Z-axis) from the cell body 41, and may be formed of a conductive member having a predetermined thickness in the front-back direction (X-axis direction).

In this embodiment, the electrode leads 42, 44 may include a positive electrode lead 42 and a negative electrode lead 44 that protrude (or extend) side by side with each other. The positive electrode lead 42 may be electrically connected to the positive electrode of the electrode assembly, and the negative electrode lead 44 may be electrically connected to the negative electrode of the electrode assembly. By means of the positive electrode lead 42 and the negative electrode lead 44, the positive electrode and the negative electrode of the electrode assembly may be electrically connected to configurations other than this battery cell 40, respectively.

At this time, as shown in FIG. 8, catch grooves 43, 45 may be formed recessed in the electrode leads 42, 44. The catch grooves 43, 45 may be configured to interact with the catch assembly 80 of the connector 50 to be described later to reinforce the coupling force between the battery cell 40 and the connector 50.

In this embodiment, the catch grooves 43, 45 may be formed in the positive electrode lead 42 and the negative electrode lead 44, respectively. Hereinafter, the catch grooves 43, 45 formed in the positive electrode lead 42 are referred to as a positive electrode lead side catch groove 43, and the catch grooves 43, 45 formed in the negative electrode lead 44 are referred to as a negative electrode lead side catch groove 45.

In this embodiment, the positive electrode lead side catch groove 43 may be formed in the side edge portion of the positive electrode lead 42. At this time, the side edge portion may be an edge portion of the side (negative direction of the Y-axis) located far away from the negative electrode lead 44 among both sides in the left-right direction (Y-axis direction) of the positive electrode lead 42.

In this embodiment, the positive electrode lead side catch groove 43 may be configured in plurality. The plurality of positive electrode lead side catch grooves 43 may be disposed to be spaced apart along the vertical direction (Z-axis direction) that is the extension direction of the positive electrode lead 42. This may be to further reinforce the coupling force between the positive electrode lead 42 and the connector 50.

In this embodiment, the negative electrode lead side catch groove 45 may be formed in the side edge portion of the negative electrode lead 44. At this time, the side edge portion may be an edge portion of the side (positive direction of the Y-axis) located far away from the positive electrode lead 42 among both sides in the left-right direction (Y-axis direction) of the negative electrode lead 44. In other words, the negative electrode lead side catch groove 45 may be opposite to the positive electrode lead side catch groove 43.

In this embodiment, the negative electrode lead side catch groove 45 may be configured in plurality. The plurality of negative electrode lead side catch grooves 45 may be disposed to be spaced apart along the vertical direction (Z-axis direction) that is the extension direction of the negative electrode lead 44. This may be to further reinforce the coupling force between the negative electrode lead 44 and the connector 50.

Meanwhile, in this embodiment, the electrode leads 42, 44 are shown as conductive members having a predetermined thickness, but the position and structure of the electrode leads 42, 44 are not particularly limited as long as they may connect the electrode assembly to the outside. As an example, the electrode leads 42, 44 may be formed of a conductive film or sheet.

Referring to FIGS. 3 and 4, the battery assembly 30 according to an embodiment of the present disclosure may include a connector 50. The connector 50 may be configured to electrically connect the battery cell 40 to other configurations.

At this time, the connector 50 according to an embodiment of the present disclosure may be a connector capable of electrically connecting the battery cell 40 to the outside (e.g., another battery cell, an external load, power source, or the like) without using a welding process.

The connector 50 according to an embodiment of the present disclosure may include a base member 60. The base member 60 may be configured to provide a base on which other configurations of the connector 50 may be installed.

Referring to FIGS. 4 and 5, in this embodiment, the base member 60 may include a base portion 61. The base portion 61 may provide a base on which an energizing assembly 70 to be described later is provided. The base portion 61 may be provided as a plate, frame, or block-shaped member having a predetermined thickness and extending in the width direction (Y-axis direction) of the electrode lead.

And, in this embodiment, the base portion 61 may include a lead surface 62. The lead surface 62 may be a surface on which the electrode leads 42, 44 are to be seated. To this end, the lead surface 62 may be parallel to one surface of the electrode leads 42, 44.

In this embodiment, the base portion 61 may extend by a length that is slightly longer than the width of the electrode leads 42, 44. Accordingly, one surface of the electrode leads 42, 44 may be seated on the lead surface 62 entirely along the width direction.

At this time, in this embodiment, a contact member hole 63 may be formed in the base portion 61. A contact member 71 to be described later may be movably coupled to the contact member hole 63. The contact member holes 63 may be configured in plurality corresponding to the number of contact members 71.

In this embodiment, one opening of the contact member hole 63 may be formed on the lead surface 62. In other words, the contact member hole 63 may be opened onto the lead surface 62. Accordingly, a portion of the contact member 71 may pass through the contact member hole 63 and contact the electrode leads 42, 44 seated on the lead surface 62.

At this time, in this embodiment, the one opening of the contact member hole 63 may have a smaller diameter than the contact member 71. The diameter (or cross-section) of the contact member hole 63 may increase toward a direction away from the lead surface 62. This may be to prevent the contact member 71 from falling off onto the lead surface 62. This will be described later together with the contact member 71.

At this time, in this embodiment, the base portion 61 may include a positive electrode side base portion 61a and a negative electrode side base portion 61b. The positive electrode side base portion 61a may be a base portion 61 provided with a positive electrode side lead surface 62a on which the positive electrode lead 42 is seated, and the negative electrode side base portion 61b may be a base portion 61 provided with a negative electrode side lead surface 62b on which the negative electrode lead 44 is seated.

In this embodiment, the positive electrode side base portion 61a and the negative electrode side base portion 61b may be spaced apart along the left-right direction (Y-axis direction) that is a direction in which the positive electrode lead 42 and the negative electrode lead 44 are arranged.

At this time, the positive electrode side base portion 61a may be configured as a pair and spaced apart along the front-back direction (X-axis direction) that is the thickness direction of the positive electrode lead 42. And, the positive electrode side lead surface 62a may be configured to face between the positive electrode side base portions 61a.

As a result, the positive electrode lead 42 may be inserted between a pair of positive electrode side base portions 61a. And, both surfaces of the positive electrode lead 42 may be seated on the positive electrode side lead surfaces 62a provided on the pair of positive electrode side base portions 61a, respectively. Of course, as shown, the positive electrode lead 42 and the positive electrode side lead surface 62a may be somewhat spaced apart by the contact member 71.

At this time, in this embodiment, the distance by which the pair of positive electrode side base portions 61a are spaced apart in the front-back direction (X-axis direction) may correspond to the thickness of the positive electrode lead 42. As a result, the positive electrode lead 42 may be fitted into between the pair of positive electrode side base portion 61a, so that the coupling force between the battery cell 40 and the connector 50 may be stronger.

Meanwhile, in this embodiment, like the positive electrode side base portion 61a described above, the negative electrode side base portion 61b may be configured as a pair and spaced apart along the front-back direction (X-axis direction) that is the thickness direction of the negative electrode lead 44. And, the negative electrode side lead surface 62b may be configured to face between the pair of negative electrode side base portions 61b. As a result, the negative electrode lead 44 may be inserted between the pair of negative electrode side base portions 61b.

Referring to FIGS. 3 and 4, the base member 60 of the connector 50 according to an embodiment of the present disclosure may include an insulating portion 64. The insulating portion 64 may be made of an insulating material and may be formed of a block-shaped member having a predetermined rigidity.

In this embodiment, the insulating portion 64 may be interposed between the positive electrode side base portion 61a and the negative electrode side base portion 61b. In other words, the positive electrode side base portion 61a and the negative electrode side base portion 61b may be connected via the insulating portion 64 interposed therebetween.

In this embodiment, the insulating portion 64 may close the right (positive direction of the Y-axis) side part of the space provided between the pair of positive electrode side base portions 61a and the left (negative direction of the Y-axis) side part of the space provided between the pair of negative electrode side base portions 61b.

Accordingly, the positive electrode side base portion 61a and the negative electrode side base portion 61b may be structurally connected to form a single rigid body. And, the positive electrode lead 42 inserted between the pair of positive electrode side base portions 61a may be prevented from falling between the pair of negative electrode side base portions 61b, or the negative electrode lead 44 inserted between the pair of negative electrode side base portions 61b may be prevented from falling between the pair of positive electrode side base portions 61a.

Furthermore, the positive electrode side base portion 61a and the negative electrode side base portion 61b may not be in electrical communication to prevent a short circuit from occurring between the positive electrode lead 42 and the negative electrode lead 44. That is, the insulating portion 64 may increase both the electrical stability and the structural stability of the connector 50.

The base member 60 of the connector 50 according to an embodiment of the present disclosure may include a connection portion 65. The connection portion 65 may configured to supplement the structural stability of the base member 60.

In this embodiment, the connection portion 65 may include a positive electrode side connection portion 65a connecting the pair of positive electrode side base portions 61a and a negative electrode side connection portion 65b connecting the pair of negative electrode side base portions 61b.

At this time, in this embodiment, the positive electrode side connection portion 65a may be located on the opposite side of the insulating portion 64 with the positive electrode lead 42 interposed therebetween. Based on FIG. 3, the opposite side may be the left side (negative direction of the Y-axis) of the positive electrode lead 42. The positive electrode side connection portion 65a may close the left (negative direction of the Y-axis) side part of the space provided between the pair of positive electrode side base portions 61a.

As a result, the pair of positive electrode side base portions 61a may be connected to each other, thereby increasing the structural stability of this connector 50. And, the positive electrode lead 42 inserted into the pair of positive electrode side base portions 61a may be prevented from falling off to the left side (negative direction of the Y-axis).

Meanwhile, in this embodiment, the negative electrode side connection portion 65b may be located on the opposite side of the insulating portion 64 with the negative electrode lead 44 interposed therebetween. Based on FIG. 3, the opposite side may be the right side (positive direction of the Y-axis) of the negative electrode lead 44. The negative electrode side connection portion 65b may close the right (positive direction of the Y-axis) side part of the space provided between the pair of negative electrode side base portions 61b.

As a result, the pair of negative electrode side base portions 61b may be connected to each other, thereby increasing the structural stability of this connector 50. And, the negative electrode lead 44 inserted into the pair of negative electrode side base portions 61b may be prevented from falling off to the right side (positive direction of the Y-axis).

Meanwhile, referring to FIG. 8, a catch assembly groove 66 may be formed recessed in the positive electrode side connection portion 65a of the connector 50 according to an embodiment of the present disclosure. The catch assembly groove 66 may be a groove for installing a catch assembly 80 to be described later.

At this time, in this embodiment, the catch assembly groove 66 may be formed on a surface facing between the positive electrode side connection portion 65a and the positive electrode side base portion 61a. The catch assembly groove 66 may be configured in plurality. The plurality of catch assembly grooves 66 may be spaced apart in the vertical direction (Z-axis direction) that is the extension direction of the positive electrode lead 42.

According to this embodiment, a catch assembly groove may be formed in the negative electrode side connection portion 65b. At this time, the catch assembly groove formed in the negative electrode side connection portion 65b may be configured similarly to the catch assembly groove 66 formed in the positive electrode side connection portion 65a described above.

Referring to FIGS. 3 to 5, the connector 50 according to an embodiment of the present disclosure may include an energizing assembly 70. The energizing assembly 70 may be an assembly for allowing the electrode leads 42, 44 of the battery cell 40 to electrically communicate with the outside.

Referring to FIG. 5, in this embodiment, the energizing assembly 70 may include a contact member 71. The contact member 71 may be a member that is in direct contact with and electrically connected to the electrode leads 42, 44. To this end, the contact member 71 may be made of a conductive material.

In this embodiment, at least a portion of the contact member 71 may be inserted into the contact member hole 63 of the base portion 61. The contact member 71 may be movably coupled to the contact member hole 63.

And, in this embodiment, at least a portion of the contact member 71 may protrude convexly in a direction from the contact member hole 63 toward the lead surface 62 (or, toward the space provided between the pair of base portions 61). As an example, the contact member 71 may have a spherical shape, but is not limited thereto.

At this time, in this embodiment, the contact member 71 may have a larger diameter than the opening of the contact member hole 63 formed on the lead surface 62. Accordingly, while at least a portion of the contact member 71 may move within the contact member hole 63, the contact member 71 may be prevented from being detached from the contact member hole 63 and falling onto the lead surface 62.

In this embodiment, the energizing assembly 70 may include a bearing member 72. The bearing member 72 may be configured to support the contact member 71 so that it may rotate (or, roll).

In this embodiment, the bearing member 72 may include a bearing portion 73. The bearing portion 73 may be a member that surrounds a portion of the contact member 71. At this time, the one portion of the contact member 71 may be a portion located far away from the lead surface 62.

At this time, the bearing portion 73 may be provided with a concavely recessed groove so that the one portion of the contact member 71 may enter. And, several bearing balls B may be provided on the inside of the groove. The bearing balls B may be interposed between the inner wall of the groove and the outer surface of the contact member 71 to rotatably support the contact member 71.

In this embodiment, the bearing member 72 may further include a rod portion 74. The rod portion 74 may extend from the bearing portion 73. As an example, as shown, the rod portion 74 may extend in the vertical direction from the lead surface 62.

An elastic member 75 to be described later may be coupled to this rod portion 74. The extension direction of the rod portion 74 may be appropriately changed in consideration of a direction in which the elastic member 75 elastically supports the bearing member 72.

Referring to FIG. 5 again, the energizing assembly 70 of the connector according to an embodiment of the present disclosure may include a guide portion 76. The guide portion 76 may be configured to guide movement of the bearing member 72 and the contact member 71 supported thereby.

In this embodiment, the guide portion 76 may be provided as a hollow member. The guide portion 76 may extend from the base portion 61 in a direction away from the lead surface 62. The above-described bearing member 72 and the contact member 71 supported thereby may be movably inserted into the hollow guide portion 76.

As a result, the bearing member 72 and the contact member 71 supported thereby may move in a direction away from or closer to the lead surface 62 along the extension direction of the guide portion 76. Meanwhile, the structure or shape of the guide portion 76 is not particularly limited as long as it may guide the moving direction of the contact member 71.

In this embodiment, the energizing assembly 70 may include an elastic member support portion 77. The elastic member support portion 77 may be configured to support the elastic member 75 to be described later. The elastic member support portion 77 may be provided on an end side of the guide portion 76 in the extension direction. The elastic member support portion 77 may cover at least a part of the end of the guide portion 76.

In this embodiment, the energizing assembly 70 may include an elastic member 75. The elastic member 75 may be a member for elastically supporting the contact member 71 toward the lead surface 62. As an example, the elastic member 75 may be a compression spring coupled through the rod portion 74, but is not limited thereto.

In this embodiment, the elastic member 75 may be interposed between the bearing member 72 and the elastic member support portion 77. One side of the elastic member 75 may be supported by the elastic member support portion 77, and the other side of the elastic member 75 may press the bearing member 72.

Through this, the elastic member 75 may elastically support the bearing member 72 and the contact member 71 supported thereby in a direction closer to the lead surface 62 based on the support force of the elastic member support portion 77. This may be to bring the contact member 71 and the electrode leads 42, 44 into contact with each other.

Hereinafter, a process in which a connector according to an embodiment of the present disclosure electrically connects a battery cell to other configurations will be described with different drawings.

Referring to FIGS. 6 and 7, the connector 50 and the battery cell 40 may be disposed parallel to each other. And, the electrode leads 42, 44 of the battery cell 40 may be inserted between the pair of base portions 61.

As the electrode leads 42, 44 are inserted between the pair of base portions 61, one surface of the electrode leads 42, 44 may be in contact with the contact member 71 of the energizing assembly 70. At this time, since the contact member 71 is rotatably supported by the bearing member 72, the contact member 71 may perform rolling motion on the outer surface of the electrode leads 42, 44.

As a result, friction generated between the contact member 71 and the electrode leads 42, 44 during the process of inserting the electrode leads 42, 44 between the pair of base portions 61 may be minimized.

Meanwhile, when the electrode leads 42, 44 are inserted between the pair of base portions 61 and occupy the space therebetween, the contact member 71 may be pushed in a direction away from the lead surface 62.

At this time, since the elastic member 75 elastically supports the bearing member 72 and the contact member 71 supported thereby toward the lead surface 62, the contact member 71 may maintain contact with the electrode leads 42, 44 interposed between the pair of base portions 61. This allows the contact member 71 and the electrode leads 42, 44 to electrically communicate with each other.

Additionally, a predetermined frictional force may be applied between the contact member 71 and the electrode leads 42, 44 by the elastic support force of the elastic member 75. Through this, the coupling between the connector 50 and the battery cell 40 may be maintained.

As described above, the contact member 71 allows the energizing assembly 70 and the electrode leads 42, 44 to electrically communicate with each other. When the connection member 14 (shown in FIG. 1) is electrically connected to the energizing assembly 70, the battery cell 40 may be electrically connected to other external configurations without using a welding process.

At this time, the energizing assembly 70 may also be electrically connected to the base portion 61 and/or the connection portion 65. To this end, the base portion 61 or the connection portion 65 may be made of a conductive material. In this case, as shown in FIG. 2, the connection member 14 may be electrically connected to the base portion 61 or the connection portion 65, thereby achieving an electrical connection between the battery cell 40 and the outside.

As such, in this embodiment, the electrode leads 42, 44 seated on the lead surface 62 and the contact members 71 elastically supported toward the lead surface 62 are in contact with each other, so that the connector 50 and the battery cell 40 may be coupled to and electrically communicate with each other.

As a result, this connector 50 may electrically connect the battery cell 40 to other external configurations without using a welding process. That is, the battery cell 40 and the connector 50 may be detachably coupled and energized (or, uncoupled and de-energized).

At this time, being detachably coupled and energized (or, uncoupled and de-energized) may mean that an operator may couple and energize (or, uncouple and deenergize) by hand or with a simple tool. Here, the simple tool may mean a driver, a drill, a wrench, or the like.

Referring to FIG. 3 again, the energizing assembly 70 of the connector 50 according to an embodiment of the present disclosure may be configured in plurality. Some of the plurality of energizing assemblies 70 may be provided on the positive electrode side base portion 61a, and some of the rest may be provided on the negative electrode side base portion 61b. As a result, the positive electrode lead 42 and the negative electrode lead 44 may be in electrical communication with the outside, respectively.

Hereinafter, the energizing assembly 70 provided on the positive electrode side base portion 61a is referred to as the positive electrode side energizing assembly 70a, and the energizing assembly 70 provided on the negative electrode side base portion 61b is referred to as the negative electrode side energizing assembly 70b.

In this embodiment, the plurality of positive electrode side energizing assemblies 70a may be spaced apart from each other along the left-right direction (Y-axis direction) that is the extension direction of the positive electrode side base portion 61a. As a result, the contact area between the positive electrode lead 42 and the plurality of contact members 71 is increased, so that this connector 50 and the battery cell 40 may be stably coupled and electrically communicate with each other.

At this time, as shown, some of the plurality of the positive electrode side energizing assemblies 70a may be provided on one of the pair of positive electrode side base portions 61a, and some of the rest of the plurality of the positive electrode side energizing assemblies 70a may be provided on the other of the pair of positive electrode side base portions 61a.

This may be to allow both surfaces of the positive electrode lead 42 to be pressed by the contact members 71 facing each other, thereby achieving more stable electrical communication and coupling between this connector 50 and the battery cell 40.

At this time, the plurality of positive electrode side energizing assemblies 70a may be disposed to be misaligned with each other in the front-back direction (X-axis direction) that is a direction in which the pair of positive electrode side base portions 61a are spaced apart from each other. Through this, the local part of the positive electrode lead 42 may be prevented from being subjected to an excessive force by the multiple contact members 71.

Meanwhile, in this embodiment, like the plurality of positive electrode side energizing assemblies 70a, the plurality of negative electrode side energizing assemblies 70b may be spaced apart from each other along the left-right direction (Y-axis direction) that is a direction in which the negative electrode side base portion 61a extends.

And, as shown, some of the plurality of the negative electrode side energizing assemblies 70b may be provided on one of the pair of negative electrode side base portions 61b, and some of the rest of the plurality of the negative electrode side energizing assemblies 70b may be provided on the other of the pair of negative electrode side base portions 61b. At this time, the plurality of negative electrode side energizing assemblies 70b may be disposed to be misaligned with each other in the front-back direction (X-axis direction) that is a direction in which the pair of negative electrode side base portions 61b are spaced apart from each other.

Referring to FIG. 8 again, the connector 50 according to an embodiment of the present disclosure may include a catch assembly 80. The catch assembly 80 may be an assembly for supplementing the coupling between the connector 50 and the battery cell 40.

In this embodiment, the catch assembly 80 is configured in plurality and may be installed in the catch assembly groove 66 of the positive electrode side connection portion 65a and the catch assembly groove of the negative electrode side connection portion 65b, respectively.

In this embodiment, the catch assembly 80 may include a catch member 81 and an elastic support body 82. The catch member 81 may be configured to be movable from the connection portion 65 onto the lead surface 62 of the base portion 61. In other words, the catch member 81 may be configured to be movable from the connection portion 65 to a space provided between the pair of base portions 61.

Through this, at least a portion of the catch member 81 may be inserted into the catch grooves 43, 45 of the electrode leads 42, 44. Therefore, the coupling force between this connector 50 and the electrode leads 42, 44 may be reinforced.

Meanwhile, in this embodiment, the elastic support body 82 may be interposed between the bottom surface of the catch assembly groove 66 and the catch member 81. One side of the elastic support body 82 may be supported by the bottom surface of the catch assembly groove 66, and the other side may press the catch member 81.

At this time, the elastic support body 82 may press the catch member 81 onto the lead surface 62 of the base portion 61. In other words, the elastic support body 82 may press the catch member 81 between the pair of base portions 61. Through this, the catch member 81 may be moved toward the electrode leads 42, 44 interposed between the pair of base portions 61, and may be inserted into and coupled to the catch grooves 43, 45.

Referring to FIG. 1 again, as described above, the connector 50 according to an embodiment of the present disclosure may electrically connect the battery cell 40 to other configurations without using a welding process. In other words, the battery cell 40 may be detachably energized and coupled (or, de-energized and uncoupled) to other configurations by this connector 50.

Accordingly, since a welding process for connecting the battery cells 40 is not required, a manufacturing process of this battery module 1 may be simplified. Furthermore, in the battery module 1 according to an embodiment of the present disclosure, a particular battery cell 40 among several battery cells 40 may be selectively and easily separated, thereby reducing maintenance costs.

Hereinafter, a battery module according to another embodiment of the present disclosure will be described with different drawings.

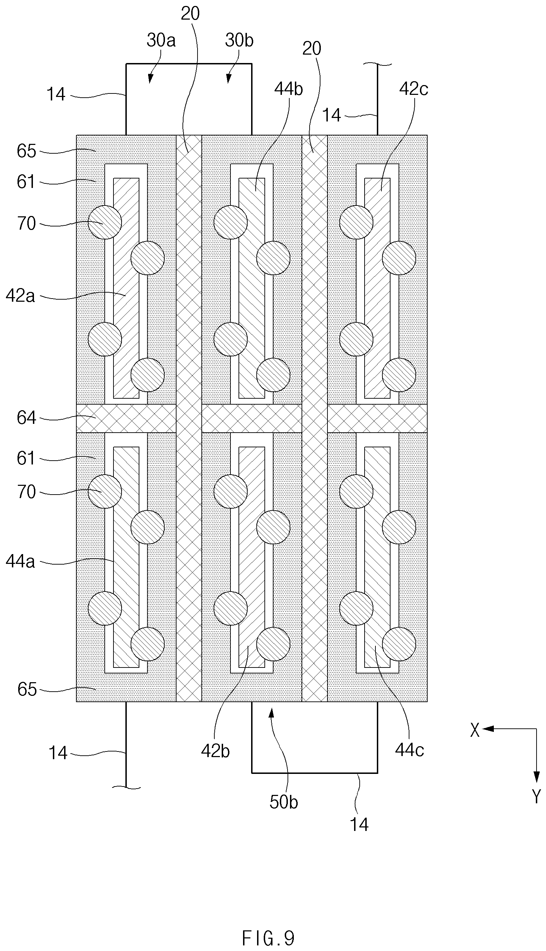

FIG. 9 is a horizontal cross-sectional view of a plurality of battery assemblies included in a battery module according to another embodiment of the present disclosure.

Referring to FIG. 9, a battery module according to another embodiment of the present disclosure may further include an insulating member 20. The insulating member 20 may be a member in the shape of a plate, frame, or block made of an insulating material. The insulating member 20 may be configured to prevent an unexpected short circuit between the battery assemblies 30.

In this embodiment, the insulating member 20 may be interposed between each of the neighboring battery assemblies 30. More specifically, as shown, one insulating member 20 may be interposed between the first battery assembly 30a and the second battery assembly 30b adjacent to each other, and another insulating member 20 may be interposed between the second battery assembly 30b and the third battery assembly 30c adjacent to each other. Accordingly, insulation between the neighboring battery assemblies 30 may be secured.

At this time, the insulating member 20 may be in contact with the base members 61, 64, 65 of the neighboring battery assemblies 30, respectively. As a result, the neighboring battery assemblies 30 may be brought into close contact with each other as much as possible without the risk of an unexpected short circuit, so that the energy density of this battery module 1 may be further improved.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery module
20: Insulating member
30: Battery assembly
40: Battery cell
50: Connector
60: Base member
70: Energizing assembly
80: Catch assembly

## Claims

1. A connector for a battery cell for electrically connecting a battery cell to the outside, the connector comprising:
a base member having a lead surface on which an electrode lead of the battery cell is placed; and
an energizing assembly coupled to the base member and electrically connected to the electrode lead placed on the lead surface,
wherein the energizing assembly comprises:
a conductive contact member movably coupled to the base member so as to allow at least a portion thereof to protrude onto the lead surface of the base member; and
an elastic member elastically supporting the contact member toward the lead surface of the base member.

2. The connector according to claim 1,
wherein the at least a portion of the contact member is formed convexly in a direction perpendicular to the lead surface.

3. The connector according to claim 2,
wherein the base member is formed with a contact member hole opened onto the lead surface, and
the contact member protrudes onto the lead surface through the contact member hole.

4. The connector according to claim 3,
wherein an opening of the contact member hole formed on the lead surface has a smaller diameter than the contact member.

5. The connector according to claim 4,
wherein the diameter of the contact member hole increases toward a direction away from the lead surface.

6. The connector according to claim 2,
wherein the contact member has a spherical shape.

7. The connector according to claim 6,
wherein the energizing assembly further comprises a bearing member that supports the contact member for rolling motion, and
the elastic member elastically supports the bearing member.

8. The connector according to claim 7,
wherein the bearing member comprises:
a bearing portion supporting the contact member; and
a rod portion extending from the bearing portion in a direction away from the contact member,
wherein the elastic member is formed of a spring inserted through the rod portion.

9. The connector according to claim 7,
wherein the energizing assembly further comprises a guide portion extending from the base member in a direction away from the lead surface, and
the bearing member is provided to be guided by the guide portion.

10. The connector according to claim 1,
wherein the base member is made of a conductive material to be electrically connected to the energizing assembly.

11. The connector according to claim 1,
wherein the base member comprises:
a positive electrode side base portion having a positive electrode lead surface on which a positive electrode lead is placed; and
a negative electrode side base portion having a negative electrode lead surface on which a negative electrode lead is placed,
wherein the energizing assembly comprises:
a positive electrode side energizing assembly coupled to the positive electrode side base portion; and
a negative electrode side energizing assembly coupled to the negative electrode side base portion.

12. The connector according to claim 11,
wherein the base member further comprises an insulating portion interposed between the positive electrode side base portion and the negative electrode side base portion.

13. The connector according to claim 1,
wherein the base member comprises:
a pair of base portions spaced apart by a predetermined distance and allowing the electrode lead of the battery cell to be inserted therebetween; and
a connection portion connecting the pair of base portions so that they are supported by each other,
wherein the lead surfaces are provided as a pair, formed on each of the pair of base portions, and disposed to face each other.

14. The connector according to claim 13,
wherein the energizing assembly is provided in plurality, and
some of the plurality of energizing assemblies are coupled to one of the pair of base portions, and some of the rest of the plurality of energizing assemblies are coupled to the other of the pair of base portions.

15. The connector according to claim 14,
wherein the plurality of energizing assemblies are disposed to be misaligned with each other in a direction in which the pair of base portions are spaced apart.

16. The connector according to claim 1, further comprising:
a catch member that is movable onto the lead surface to be caught by the electrode lead placed on the lead surface.

17. The connector according to claim 16,
wherein the base member comprises a base portion extending in one direction and having the lead surface provided on the side,
wherein the energizing assembly is provided in plurality and arranged along the direction in which the base portion extends, and
the catch member is provided in plurality and arranged in a direction perpendicular to the direction in which the base portion extends.

18. A battery assembly comprising:
a battery cell comprising a cell body having an electrode assembly and an electrode lead electrically connected to the electrode assembly and extending to the outside of the cell body; and
the connector for electrically connecting the battery cell to the outside,
wherein the connector comprises:
a base member having a lead surface on which the electrode lead is placed; and
an energizing assembly coupled to the base member and electrically connected to the electrode lead placed on the lead surface,
wherein the energizing assembly comprises:
a conductive contact member movably coupled to the base member so as to allow at least a portion thereof to protrude onto the lead surface of the base member; and
an elastic member elastically supporting the contact member toward the lead surface of the base member,
wherein the electrode lead of the battery cell and the contact member are in electrical communication with each other.

19. A battery module comprising:
a housing; and
a plurality of battery assemblies accommodated in the housing and arranged in a row,
wherein the battery assemblies comprise:
a battery cell comprising a cell body having an electrode assembly and an electrode lead electrically connected to the electrode assembly and extending to the outside of the cell body; and
a connector for electrically connecting the battery cell to the outside,
wherein the connector comprises:
a base member having a lead surface on which the electrode lead is placed; and
an energizing assembly coupled to the base member and electrically connected to the electrode lead placed on the lead surface,
wherein the energizing assembly comprises:
a conductive contact member movably coupled to the base member so as to allow at least a portion thereof to protrude onto the lead surface of the base member; and
an elastic member elastically supporting the contact member toward the lead surface of the base member.

20. The battery module according to claim 19, comprising:
an insulating member interposed between each of the plurality of battery assemblies,
wherein the insulating member is in respective contact with the base member of neighboring battery assemblies among the plurality of battery assemblies.
